# EUROPEAN PATENT SPECIFICATION

(11) **EP 0 940 331 B1**
(45) Date of publication and mention of the grant of the patent: **08.06.2005**
(21) Application number: 99200570.2
(22) Date of filing: 01.03.1999
(51) Int. Cl.: B62J 6/04, F21S 8/10

(54) **Rear light**
Rückleuchte
Feu arrière

(30) Priority: 06.03.1998 NL 1008523
(43) Date of publication of application: 08.09.1999
(73) Proprietor: Spanninga Metaal B.V., 8501 MK Joure (NL)
(72) Inventor: Hosper, Alle, 8512 AD Broek (NL)
(74) Representative: Vollebregt, Cornelis Jacobus, Ir.

(56) References cited:
- EP-A- 0 587 501
- US-A- 3 969 621
- PATENT ABSTRACTS OF JAPAN vol. 014, no. 473 (M-1035), 16 October 1990 & JP 02 189802 A (KOITO MFG CO LTD), 25 July 1990
- PATENT ABSTRACTS OF JAPAN vol. 014, no. 436 (M-1027), 18 September 1990 & JP 02 172101 A (STANLEY ELECTRIC CO LTD), 3 July 1990

## Description

The invention relates to a rear light for a bicycle or the like, comprising a housing which is open on one side and a light source fitted in said housing, and a lens disposed near the open side of the housing, wherein means for receiving light emitted from both sides of the light source and transmitting said light in the direction of the sides of said housing are provided in the housing.

A requirement which is made of rear lights for bicycles and the like in many countries is that the light must be emitted in rearward direction over an angle of ± 110°. Efforts have been made to achieve this by providing a lens and/or reflector element of a transparent material projecting far from the housing and widening in a direction away from said housing, but these efforts have resulted in an assembly which projects far behind the point of attachment of the rear light and which is furthermore very vulnerable.

Another solution has been sought in the use of several light sources disposed in side-by-side relationship. This increases the cost price of the rear light, however, as well as the energy consumption, which is a major drawback, especially when batteries are used for feeding the light sources.

According to the invention, elongated elements of a light-transmitting material extending from the light source towards the side of the housing are provided on both sides of the light source, whereby the ends of the elongated elements that face away from the light source are freely visible near the side of the housing.

When using the construction according to the invention, the light from the light source that is normally emitted in rearward direction with rear lights can be emitted in rearward direction from the rear light via the lens, whilst the "scattered light" emitted from the side of the light source, which is not normally not utilized, or to a lesser extent, can be led in the direction of the sides of the housing by means of the elongated elements, whereby an effective light emission can be effected both over the entire width of the housing and on the sides. Generally, one light source will suffice thereby, whilst the housing may be of a flat and sturdy construction.

It is noted that Patent Abstract of Japan, Vol. 014, No. 473 (M-1035), 16th October 1990, discloses a headlight for a motor vehicle, wherein an objective lens is disposed in front of the lamp in a lamp housing, whilst the housing itself is closed by means of a further lens. A light conductor is provided between the outer circumference of the objective lens and the inner circumference of the housing, all this in such a manner that an emission of light in forward direction is effected over the entire diameter of the housing. Said headlight is of complicated and voluminous construction.

The invention will be explained in more detail hereafter by means of a few embodiments of construction according to the invention, which are schematically illustrated in the accompanying drawings.
Figure 1 is a schematic, perspective view of a first embodiment of a rear light according to the invention.
Figure 2 schematically shows a few parts of the rear light which is shown in Figure 1, in the assembled form thereof, partially in elevation and partially in sectional view.
Figure 3 is a view of elongated elements of a light-transmitting material which form part of the rear light, with a mid-section being drawn in.
Figure 4 is a schematic sectional view of a second embodiment of a rear light according to the invention.
Figure 5 is a view of the light source and the associated reflector and elongated elements of a light transmitting material of the rear light according to Figure 4.
Figure 6 is a sectional view of one of the light transmitting elements which are shown in Figure 5.
Figure 7 is a perspective view of a third embodiment of a rear light according to the invention.

When using the terms " rearward", " horizontal ", "vertical" and the like herein, it is assumed that the rear light occupies its normal position of use.

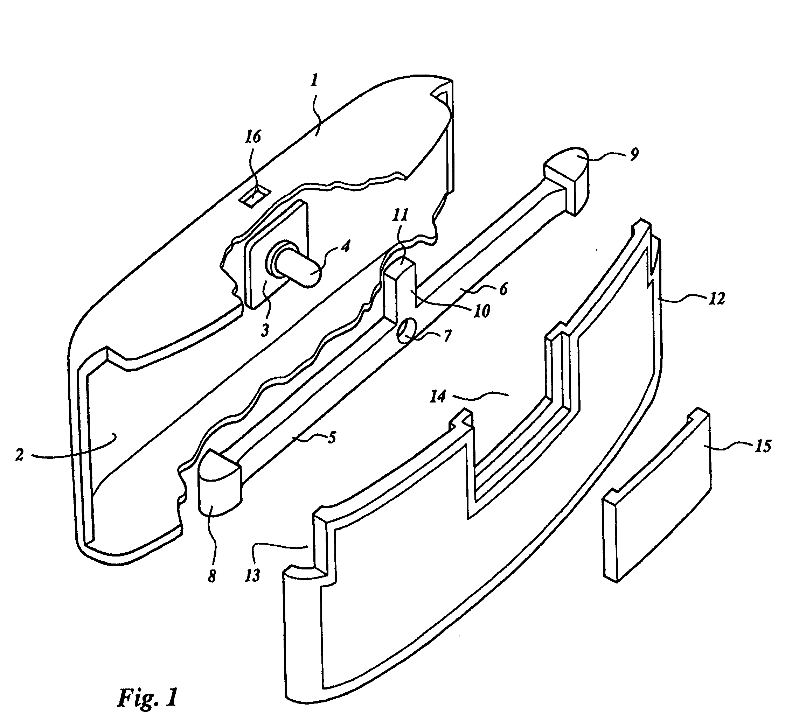

As is shown in Figure 1, a rear light comprises a box shaped housing 1 which bounds an elongated opening 2 on a rear side. Housing 1 can be secured to a bicycle or the like by means of fasteners (not shown) in a usual manner.

A support 3 is provided in housing 1 for mounting a light source, preferably in the form of a so-called LED 4, in the housing. The rear light is furthermore prov i ded with two al i gned el ongated elements 5 and 6, which are in one piece in the illustrated embodiment, and which are made of a light-transmitting material, preferably plastic material, such as transparent PMMA.

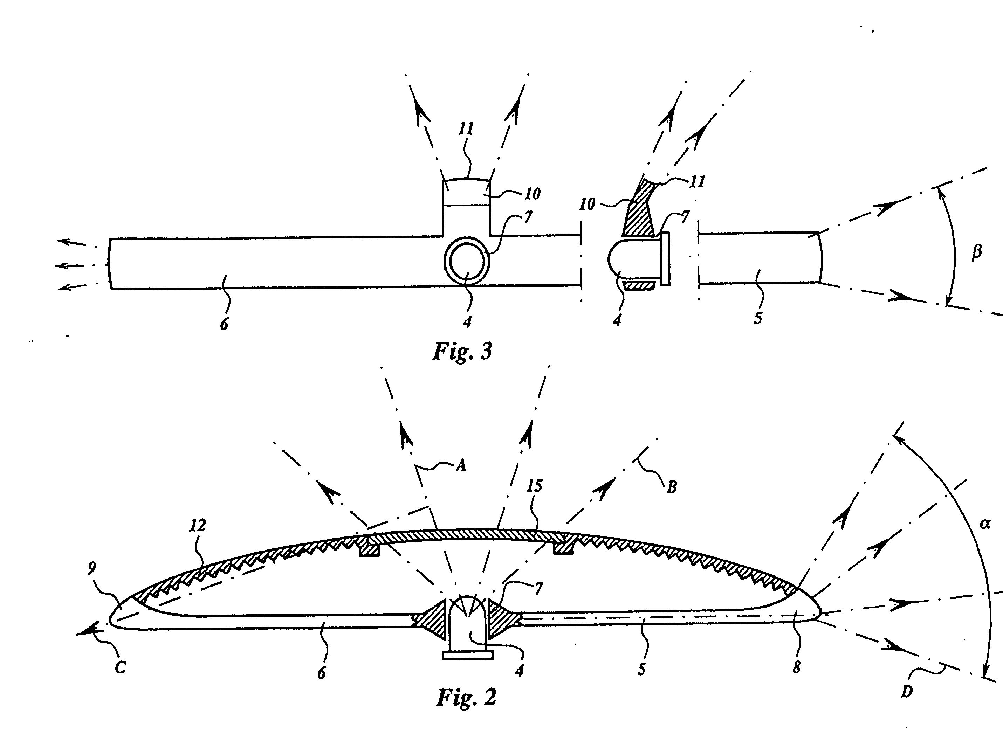

Near the place where the two elongated elements 5 and 6 join each other, a hole 7 is provided for receiving the light source 4 in the form of a LED, as is shown in more detail in Figure 2.

Elongated elements 5, 6 have a rectangular cross-section, and they are provided at their ends with thickenings 8 and 9, respectively. During normal use of the rear light, the long sides of said rectangle extend substantially vertically.

Furthermore, an upwardly sloping, elongated element 10 joins elongated elements 5 and 6 near hole 7, which element 10 comprises a boundary surface 11 at its upper end, which is positioned at the upper side of housing 1 in the mounted condition of the rear light on a bicycle or the like.

The rear light furthermore comprises a reflector 12, which is dimensioned such that it can be secured to housing 1 in such manner as to close the open side 2 of housing 1. As is shown in Figure 1, recesses 13 are formed in the upper corner points, near the ends of the reflector, for accommodating the thickened ends 8 and 9 of elongated elements 5 and 6 in the assembled condition of the rear light. A recess 14 for accommodating a lens 15 is furthermore formed in the upper part of the reflector 12, near the centre of reflector 12. It will be apparent, however, that the lens may also be accommodated at a different location in the reflector, for example near the bottom side.

In the mounted condition of the rear light, element 10 will be passed through a hole 16 formed in an upper wall of housing 1, and elongated elements 5 and 6 will be retained between housing 1 and the reflector 12, which is secured to housing 1 by means of usual fasteners (not shown). The construction is thereby such that lens 15 will be positioned near LED 4.

As will be apparent from Figure 2, the light which is emitted from LED 4 in the direction of reflector 12 will exit via lens 15 over an angle formed by lines A and B so as to effect a proper lighting in rearward direction. In addition to that, light which is emitted on the sides of the LED will be conducted over the entire width of the reflector by the elongated, light-conducting elements 5 and 6, so that elongated elements 5 and 6 will generate a light effect, at least over part of the reflector area, on either side of lens 15, via the reflector 12 of a light-transmitting material.

In addition, light will exit via the thickened ends 8 and 9 of the elongated elements, as is also indicated by arrows in Figure 2. In order to effect emission of light over a reasonable angle α and β at ends 8 and 9, respectively, both in horizontal and in vertical direction, the outer boundary surfaces of said ends are preferably curved both in a horizontal plane, over an angle of for example 30°, and in a vertical plane.

By using the above-described construction, it is thus possible to cause the light to be spread in rearward and in lateral direction over the angle formed by lines C and D.

It will be apparent that it is thus possible in a simple manner to have the light exit over a very large range in accordance with the relevant requirements made of rear lights.

Furthermore, the light is caused to spread in upward direction via the part 10 that extends through hole 16 in the housing, which has the advantage, among other things, that the rider of the bicycle or the like can check whether or not the light source is on while driving.

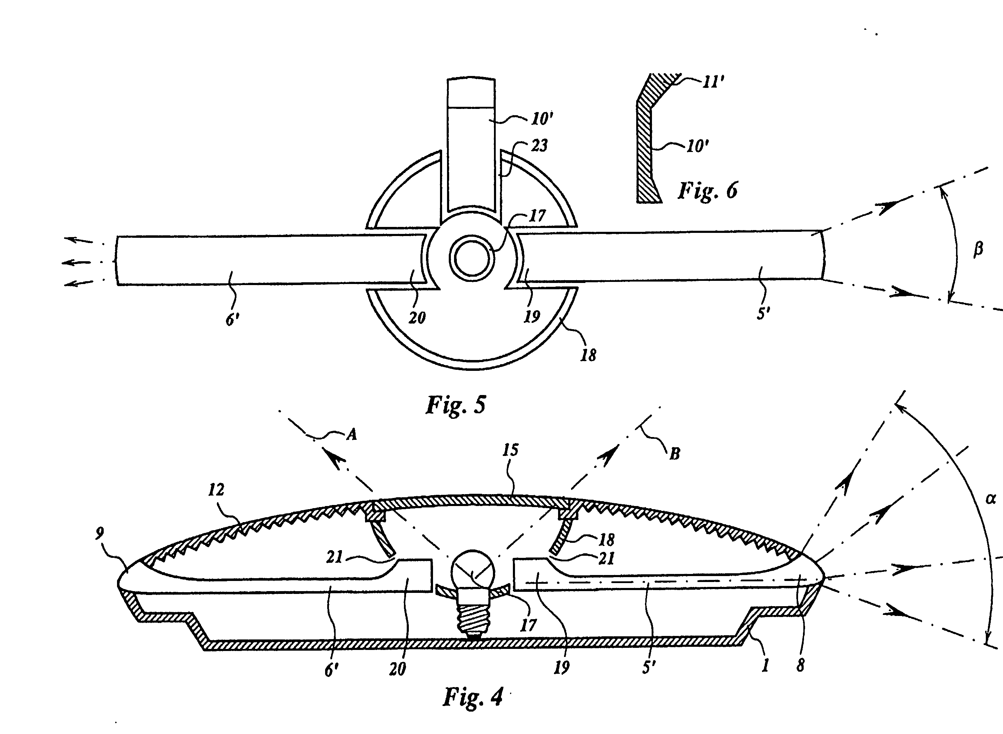

Figures 4 - 6 show in broad outline a rear light which corresponds with the rear light as shown in Figures 1 - 3. Those parts of the rear light of Figures 4 - 6 that correspond with parts of the rear light described above with reference to Figures 1 - 3 are indicated by the same numerals as in Figures 1 - 3.

In this embodiment, the light source is a conventional incandescent lamp 17, which is disposed in a parabolic reflector 18, whose boundary edge adjoins the ends of reflector 15.

In this embodiment, elongated elements 5' and 6' are separate parts whose ends facing towards the incandescent lamp are made up of thickenings 19 and 20, respectively, which are present in holes 21 formed in the parabolic reflector 18, so that light emitted from the incandescent lamp 17 in lateral direction can pass through the elongated elements of a light-transmitting material in a similar manner as described above. A further elongated element 10' of a light-transmitting material extends upwards through a hole 22 formed in the parabolic reflector 18, and it is provided with a widely diverging end, which is positioned in the hole 16 formed in housing 1 in a similar manner as described above with regard to part 10.

It will be apparent that modifications and/or additions to the above-described embodiments of the construction according to the invention are possible. Thus, the elongated light-conduction elements may also be made up of suitable glass fibre constructions or similar light-conducting materials.

Thus it is possible to use separate elongated elements 5 and 6 in the embodiment of Figures 1 - 3, for example. In addition to that, the elongated may also be curved rather than rectilinear.

The elongated elements may for example have a hollow, tubular cross-section, such as a square or circular cross-section, or a U-shaped cross-section, rather than a massive cross-section.

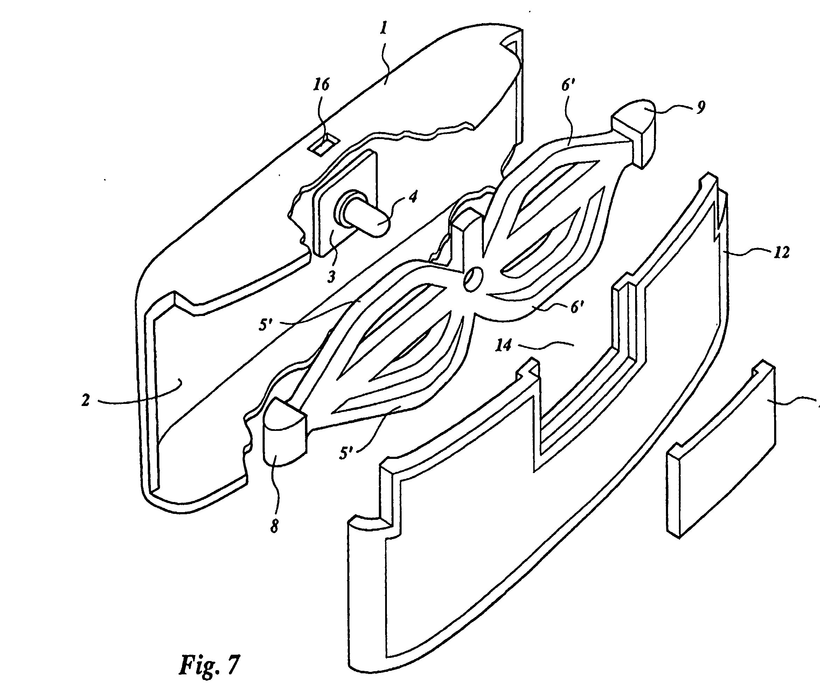

Another possibility is shown in Figure 7, wherein parts which correspond with parts of the embodiment according to Figures 1 - 3 are indicated by the same numerals as in Figure 3.

As will be apparent from Figure 7, in this embodiment the single elongated elements 5 and 6 have been replaced by a few elongated elements 5' and 6', respectively, which are positioned one above another. In this embodiment, the facing ends of the elongated elements join hole 7 over practically the entire circumference thereof, so that the sidel ight from the light source is optimally deflected to the side and utilized. Instead of using the elements 5' and 6' positioned one above another, it would also be possible to use a single, disc-shaped element, but this requires more material and increases the weight.

## Claims

1. A rear light for a bicycle or the like, comprising a housing (1) which is open on one side and a light source (4) fitted in said housing (1), and a lens (15) disposed near the open side (2) of the housing (1), wherein means for receiving light emitted from both sides of the light source (4) and transmitting said light in the direction of the sides of said housing (1) are provided in the housing (1), **characterized in that** elongated elements (5,6) of a light-transmitting material extending from the light source (4) towards the side of the housing (1) are provided on both sides of the light source (4), whereby the ends of the elongated elements (5,6) that face away from the light source are freely visible near the side of the housing

2. A rear light according to claim 1, **characterized in that** the lens (15) is placed in a recess (14), which is provided in a reflector (12) of a transparent material which closes the open side (2) of the housing (1).

3. A rear light according to claim 1 or 2, **characterized in that**, seen in horizontal sectional view, the boundary wall of one end (8,9) of an elongated element (5,6) extends over an angle of about 30° or more.

4. A rear light according to any one of the preceding claims, **characterized in that** the ends (8,9) of said elongated elements (5,6) are curved in a horizontal plane.

5. A rear light according to any one of the preceding claims, **characterized in that** the ends (8,9) of said elongated elements (5,6) are curved in a vertical plane.

6. A rear light according to any one of the preceding claims, **characterized in that** the ends (8,9) of said elongated elements (56) are accommodated in recesses (13) formed in a reflector (12) which closes the housing on the open side thereof.

7. A rear light according to any one of the preceding claims, **characterized in that** the two elongated elements (5,6) are in one piece, and that a hole (7) for receiving the light source (4) is provided near the place where the two elongated elements (5,6) join each other.

8. A rear light according to any one of the preceding claims, **characterized in that** a light-transmitting element (10) extending upwards from the light source (4) is provided, whose end (12) facing away from the light source (4) is visible near the upper side of the rear light.

9. A rear light according to any one of the preceding claims, **characterized in that** several elongated elements (5',6') of a light-transmitting material disposed one above another are present on either side of the light source (4).

10. A rear light according to any one of the preceding claims, **characterized in that** ends of elements of a light-transmitting material that face towards the light source (4) surround a hole for the light source at least substantially over the entire circumference thereof.

## Patentansprüche

1. Rückleuchte für ein Fahrrad oder ähnliches, umfassend ein auf einer Seite offenes Gehäuse (1) und eine in das Gehäuse (1) eingepasste Lichtquelle (4), und eine nahe der offenen Seite (2) des Gehäuses (1) angeordnete Linse (15), worin Mittel zum Lichtempfang von beiden Seiten der Lichtquelle (4) und Weiterleitung des Lichts in Richtung der Seiten des Gehäuses (1) im Gehäuse (1) vorgesehen sind, **dadurch gekennzeichnet, dass** sich von der Lichtquelle (4) in Richtung der Seiten des Gehäuses (1) verlängerte Elemente (5,6) eines lichtleitenden Materials auf beiden Seiten der Lichtquelle (4) vorgesehen sind, wobei die von der Lichtquelle wegzeigenden Enden der verlängerten Elemente (5,6) nahe der Seite des Gehäuses (1) frei sichtbar sind.

2. Rückleuchte nach Anspruch 1, **dadurch gekennzeichnet, dass** die Linse (15) in einer in einem Reflektor (12) aus transparentem Material, der die offene Seite (2) des Gehäuses (1) abschließt, vorgesehenen Aufnahme (14) angeordnet ist.

3. Rückleuchte nach Anspruch 1 oder 2, **dadurch gekennzeichnet, dass** sich die Begrenzungswände eines Endes (8,9) eines verlängerten Elementes (5,6), in horizontaler Schnittansicht betrachtet, über einen Winkel von etwa 30° oder mehr erstrecken.

4. Rückleuchte nach einem der voranstehenden Ansprüche, **dadurch gekennzeichnet, dass** die Enden (8,9) der verlängerten Elemente (5,6) in einer horizontalen Ebene gewölbt sind.

5. Rückleuchte nach einem der voranstehenden Ansprüche, **dadurch gekennzeichnet, dass** die Enden (8,9) der verlängerten Elemente (5, 6) in einer vertikalen Ebene gewölbt sind.

6. Rückleuchte nach einem der voranstehenden Ansprüche, **dadurch gekennzeichnet, dass** die Enden (8, 9) der verlängerten Elemente (5,6) in in einem Reflektor (12), der das Gehäuse an seiner offenen Seite abschließt, ausgebildeten Aufnahmen(13) angeordnet sind.

7. Rückleuchte nach einem der voranstehenden Ansprüche, **dadurch gekennzeichnet, dass** die verlängerten Elemente (5,6) einstückig sind, und dass ein Loch (7) zur Aufnahme der Lichtquelle (4) nahe der Stelle, an der sich die beiden verlängerten Elemente (5,6) treffen, vorgesehen ist.

8. Rückleuchte nach einem der voranstehenden Ansprüche, **dadurch gekennzeichnet, dass** ein sich von der Lichtquelle (4) nach oben erstreckendes lichtleitendes Element (10) vorgesehen ist, dessen von der Lichtquelle (4) wegzeigendes Ende (11) nahe der oberen Seite der Rückleuchte sichtbar ist.

9. Rückleuchte nach einem der voranstehenden Ansprüche, **dadurch gekennzeichnet, dass** mehrere verlängerte Elemente (5,6) eines lichtleitenden Materials eines über dem anderen angeordnet auf jeder Seite der Lichtquelle (4) vorhanden sind.

10. Rückleuchte nach einem der voranstehenden Ansprüche, **dadurch gekennzeichnet, dass** Enden von Elementen eines lichtleitenden Materials, die in Richtung der Lichtquelle (4) zeigen, ein Loch für die Lichtquelle zumindest wesentlich über deren gesamten Umfang umschließen.

## Revendications

1. Feu arrière pour une bicyclette ou similaire, comprenant un boîtier (1) qui est ouvert sur un côté et une source lumineuse (4) montée dans ledit boîtier (1) et une lentille (15) disposée près du côté ouvert (2) du boîtier (1), dans lequel des moyens pour recevoir la lumière émise à partir des deux côtés de la source lumineuse (4) et transmettant ladite lumière dans la direction des côtés dudit boîtier (1) sont disposés dans ledit boîtier (1), **caractérisé en ce que** des éléments allongés (5, 6) en un matériau transmettant la lumière s'étendant de la source lumineuse (4) vers le côté du boîtier (1) sont disposés de part et d'autre de la source lumineuse (4), moyennant quoi les extrémités des éléments allongés (5, 6) qui se trouvent éloignées de la source lumineuse sont librement visibles près du côté du boîtier (1).

2. Feu arrière selon la revendication 1,
**caractérisé en ce que** la lentille (15) est placée dans un évidement (14), qui est prévu dans un réflecteur (12) d'un matériau transparent qui ferme le côté ouvert (2) du boîtier (1).

3. Feu arrière selon la revendication 1 ou 2, **caractérisé en ce que**, vu en coupe horizontale, la paroi périphérique d'une extrémité (8, 9) d'un élément allongé (5, 6) s'étend sur un angle d'environ 30° ou plus.

4. Feu arrière selon l'une quelconque des revendications précédentes, **caractérisé en ce que** les extrémités (8, 9) desdits éléments allongés (5, 6) sont courbes dans un plan horizontal.

5. Feu arrière selon l'une quelconque des revendications précédentes, **caractérisé en ce que** les extrémités (8, 9) desdits éléments allongés (5, 6) sont courbes dans un plan vertical.

6. Feu arrière selon l'une quelconque des revendications précédentes, **caractérisé en ce que** les extrémités (8, 9) desdits éléments allongés (5, 6) sont logées dans des évidements (13) formés dans un réflecteur (12) qui ferme le boîtier sur le côté ouvert de celui-ci.

7. Feu arrière selon l'une quelconque des revendications précédentes, **caractérisé en ce que** les deux éléments allongés (5, 6) sont d'une seule pièce et **en ce qu'**un trou (7) pour recevoir la source lumineuse (4) est prévu près de l'emplacement où les deux éléments allonqés (5, 6) se rejoignent.

8. Feu arrière selon l'une quelconque des revendications précédentes, **caractérisé en ce qu'**un élément transmettant la lumière (10) s'étendant vers le haut à partir de la source lumineuse (4) est prévu, dont l'extrémité (11) se trouvant éloigné de la source lumineuse (4) est visible près du côté supérieur du feu arrière.

9. Feu arrière selon l'une quelconque des revendications précédentes, **caractérisé en ce que** plusieurs éléments allongés (5', 6') en un matériau transmettant la lumière disposés l'un au-dessus de l'autre sont présents de part et d'autre de la source lumineuse (4).

10. Feu arrière selon l'une quelconque des revendications précédentes, **caractérisé en ce que** des extrémités d'éléments en un matériau transmettant la lumière faisant face à la source lumineuse (4) entourent un trou pour la source lumineuse au moins sensiblement sur toute la circonférence de celui-ci.
